Europäisches Patentamt

**European Patent Office**

**Office européen des brevets**

(11) Publication number: **0 141 454**
**A2**

# (12) EUROPEAN PATENT APPLICATION

(21) Application number: **84201378.1**

(22) Date of filing: **27.09.84**

(51) Int. Cl.⁴: **E 06 B 9/205**
**E 06 B 9/204, E 06 B 9/20**

(30) Priority: **21.10.83 IT 6808583**

(43) Date of publication of application:
**15.05.85 Bulletin 85/20**

(84) Designated Contracting States:
**AT BE CH DE FR GB LI LU NL SE**

(71) Applicant: **Abatenda di Serafini Giovanni**
**via Fiocchetto, 33**
**I-10152 Turin(IT)**

(72) Inventor: **Serafini, Giovanni**
**via Fiocchetto, 33**
**I-10152 Turin(IT)**

(74) Representative: **Robba, Eugenio**
**Studio "INTERPATENT" via Caboto 35**
**I-10129 Turin(IT)**

(54) **Energy recovery winch to operate curtains and roller blinds.**

(57) A curtain winding up winch is provided with a control device with bevel gears (9) (11) having a 1:1 ratio.

In order to allow lifting the curtain and ensuring the irreversibility of such action the winch is provided with an irreversibility device formed by a helical spring (33), which is enclosed within a block (41) rigidly connected to the handgrip (7) and is engaged on a sector bushing (15) having a rotational clearance relative to the hub (37) of the first control bevel gear (9).

Coaxially mounted on the second bevel gear (11) is a control shaft (13) coaxial to the curtain winding up roller (17) and rigidly connected to it; extending between said shaft (13) and the curtain winding up roller (17) is a double helical spring (27) fixed at one end to the control housing (7), and at the other end rigidly connected at (29) to the curtain winding up roller (17).

FIG. 1

- 1 -

## ENERGY RECOVERY WINCH TO OPERATE CURTAINS AND ROLLER BLINDS

The present invention relates to an energy recovery winch which is of the type adapted to operate rolling shutters, curtains, rolling gates, roller blinds in general.

It is known that the conventional winches which are on the market presently for the operation of curtains and/or roller blinds have a rather slow operation ratio, namely in the order of from 1:8 to 1:10, and this for two fundamental reasons, one of them aiming to render not very troublesome and easier the operation of such winches for lifting the curtains (whether rolling shutters and/or roller blinds), especially if said curtains and/or roller blinds have a considerable width (wide windows, balcony windows, veranda and so on), and the other aiming to render irreversible the said winding up or lifting movement of the roller blinds for obvious safety reasons and to prevent the curtains and/or roller blinds from descending, even slowly, to their original position after having been rolled up and lifted.

Now, said normally operating winches have the disadvantage in that their operation is slow owing to the ratio between the driving toothed members and the driven toothed members; on the other hand, the provision of more rapidly operating winches, i.e. higher ratio winches, would give rise to the above disadvantages, i.e. toilsome lifting and non-irreversibility of the movement.

The object of the present invention is to obviate these disadvantages by providing a manually operated winch for the lifting of rolling shutters, curtains, rolling gates and roller blinds in general, which, besides being extremely rapid in its operation, renders this latter easy and not toilsome at all, in addition to fully ensuring the irreversibility of the movement.

The energy recovering winch for roller blinds which forms the subject of the present invention consists substantially of a manual control shaft to whose outer end there is applied the known manual operation device common to all the curtain winding up mechanisms, and on whose opposite end disposed inside the control envelope there is keyed a bevel gear in direct drive engagement with another bevel gear orthogonal to it and coaxial to the winding up shaft; at the inner end of said control shaft there being mounted, in register with the first bevel gear, a support bushing on which an irreversibility device is mounted which allows the gear to move, in one or the other direction of rotation, only when the movement comes from said control shaft, and preventing the movement to said control shaft when the rotation drive is imparted to the gear coaxial to the said control shaft; on the second bevel gear, perpendicular to the first bevel gear, there being keyed a central shaft coaxial to the winding up shaft, rigidly connected to this latter and extending inside it, on which shaft there is wound a double helical spring connected, on one hand, to a fixed point of the control housing and, on the other hand, to a fixed point of the curtain winding up shaft; the lowering movement of the curtain and the resulting rotation movement of the roller on which the curtain is wound, torsionally loading said spring which will store said energy and return it to the user during the lifting of the curtain, thereby facilitating said lifting of the curtain itself.

Another fundamental characteristic of the device consists in that the irreversibility device provided in the control box of the winch is substantially formed by a helical spring anchored with one of its ends on a keyed bushing rigidly connected to the control shaft; said bushing for hooking the helical spring supporting laterally a circular sector having a rotational clearance with respect to the cavity of the hub of the first bevel gear, in which cavity the said bushing is housed; the hub of the said first bevel gear, the hooking bushing for hooking the helical spring, and the spring itself, being lodged in a special block, for example an antifriction block, provided at the end of the control shaft housing the irreversibility mechanism being created in virtue of the fact that, when the rotation drive, in one or the other direction, is directly given by the shaft, the rotational clearance provided between said shaft and the hub of the bevel gear gives rise to a narrowing of the said helical spring, because this latter is pulled by the shaft with respect to the cavity of the bevel gear hub, thus allowing the relative rotational movement of the spring with respect to the seating of the gear hub and the antifriction lodging block; while, instead, when the rotation drive is given directly to the bevel gear, this latter rotates, in one or the other direction relative to the bushing to which the helical spring is fastened, in a direction opposite to the "pulling" direction , thereby widening the spring itself which exerts a pressure against the cylin

- 4 -

drical wall of the seating in which it is housed, thus locking said rotational movement in one and the other direction.

The invention will now be described in detail with particular reference to the annexed drawings, given by way of non limiting example, in which:

Figure 1 is an axial section of the control device of the winch for roller blinds, according to the invention;

Figure 2 is a sectional view of Figure 1 along the line II-II;

Figure 3 is an elevational view of the winch according to the invention;

Figure 4 is an elevational side view of the anchoring bushing for the helical spring;

Figure 5 is a plan view of the bushing shown in Figure 4;

Figure 6 is an axial section of the first bevel gear;

Figure 7 is a plan view of the first bevel gear shown in Figure 6;

Figure 8 is a partially broken axial section showing the winding up roller control shaft and the winding up roller itself.

As clearly results from the Figures, the lifting device with energy recovering winch for curtains, rolling shutters, roller blinds and the like, according to the present invention, is formed substantially by a manual control shaft 1 to whose outer free end there is applied the known ring-shaped manual operation device 3, and to whose opposite end 5 situated inside the gripping housing 7 there is keyed a bevel gear 9 in direct engagement with another bevel gear 11 orthogonal to the bevel gear 9 and coaxial to the winding up shaft 13.

On the inner end 5 of said control shaft 1 there is mounted, in register with the first bevel gear 9, a support bushing 15 having mounted thereon the irreversibility device which will be described later.

Said irreversibility device allows the gear 9 to rotate in one/or the other direction only when the drive for said rotational movement comes from the control shaft 1, while preventing any possibility of rotation in one and/or the other direction to said gear 9 and associated shaft 1 when the rotational movement drive is imparted by the gear 9, for example for the unwinding and lowering of the curtain or roller blind in consequence of the rotation of the bevel gear 11.

Said irreversibility device, which, as said before, will be described in detail later, is very important for preventing the curtain and/or roller blind from unwinding by itself, falling from the "lifted" position to the "lowered" position.

This is desirable also for obvious safety reasons.

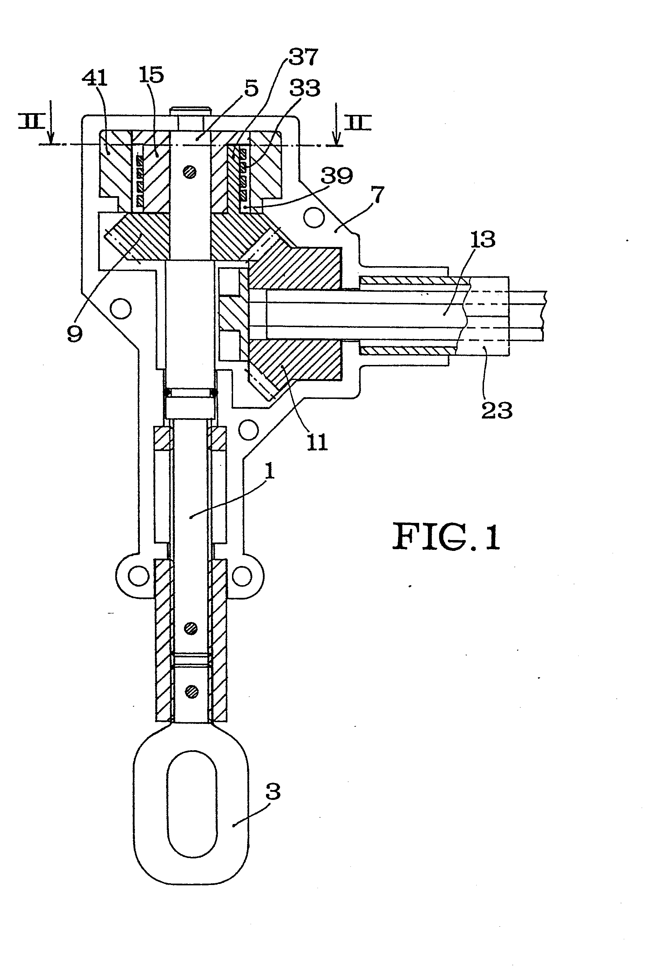

As is clearly apparent from Figure 1, the bevel gears 9 and 11 are in direct relationship with a transmission ratio 1:1, and to each turn of the gear 9 will correspond a turn of the gear 11.

Generally, said transmission ratio 1:1 is toilsome for the user who has to lift a curtain of considerable dimensions or a roller blind or a rolling gate. In case of a roller blind of considerable dimensions, the said ratio 1:1 is practically unusable.

On the contrary, in the embodiment of the present invention, described by way of example, said ratio non only becomes easily unsable, but is also rapidly obtainable.

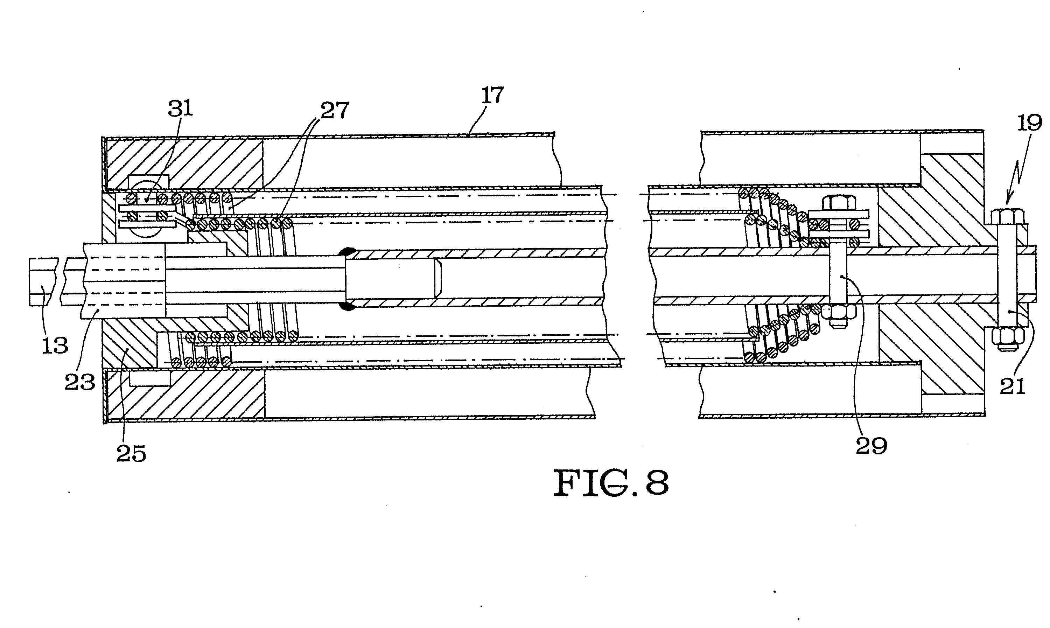

Keyed within the gear 11 is a shaft 13 controlling the winding up roller 17, disposed coaxially inside said roller. (Figure 8).

Obviously, said shaft 13 extends along the whole length of the curtain and/or the roller blind and is keyed at 19 together with the curtain winding up shaft 17 at the end opposite to the bevel gear 11.

A special mechanical means, for example a threaded member 21, clamps and locks the inner shaft 13 and the outer roller 17 to one another.

Still at the gear 11, rigidly connected to the housing 7 and coaxial to the shaft 13 is a stub shaft 23, also hexagonal as the shaft 13 and fixed, not only to the housing 7 but also to a bushing 25 rigidly connected to the housing 7 and hence stationary.

Originating from said fixed bushing 25 and extending along almost the whole length of the shaft 13 is a double helical spring 27 disposed inside the curtain winding up roller 17 and fixed thereto at 29.

The fixing of said double helical spring 27 to the bushing 25 is carried out at 31.

The operation is obvious, but it is deemed necessary to describe it in order to facilitate the better understanding of the device which is being described.

Operation of the manual control shaft 1 causes the rotation of the gear 9, and consequently that of the gear 11 engaged with the inner shaft 13, and then that of the curtain winding roller 17 rigidly connected to the shaft 13. The stub shaft 23 and the bushing 25 remain stationary, rigidly connected to the housing 7. The double helical spring 27, fixed at one end to the shaft 13 and at the other end to the bushing 25 twists and is loaded with mechanical energy.

During the operation of the control shaft 1 in the opposite direction (lifting of the curtain and/or the roller blind), said double helical spring 27 returns to the user the mechanical energy stored during the preceding step and thus facilitates the operation of the winch device during the step which is being accomplished (lifting).

Said aid and energy return permits the use of high ratios; such as 1:1, between the bevel gears of the device.

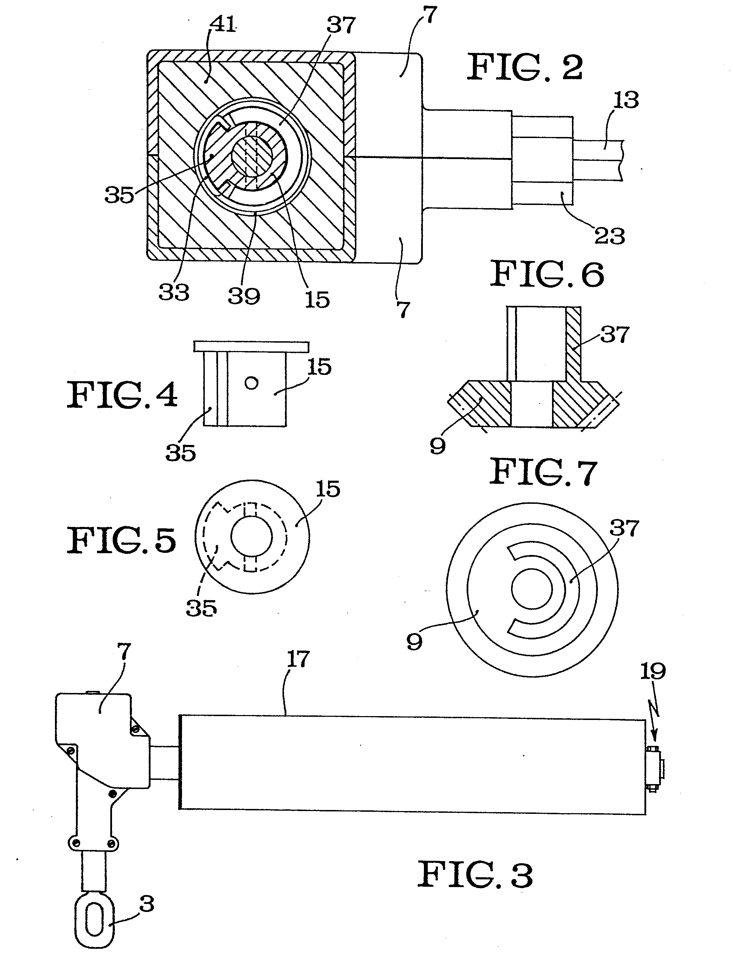

The irreversibility device mentioned hereinbefore is substantially formed by a helical spring 33 anchored at its ends to a bushing 15 rigidly keyed on the control shaft 1; supported laterally by this bushing 15 is a circular sector 35 having a rotational clearance relative to the sector hub 37 of the first bevel gear 9, in register with which hub said bushing 15 is disposed. (Figure 2).

The bushing 15, the sector hub 37 of the bevel gear 9 and the helical spring 33 are housed in a special cavity 39 of a special block 41, for example an antifriction block, provided at the end opposite to the handgrip where the manual operation device 3 is mounted.

The operation of said irreversibility device is quite simple, but also in this case it is deemed useful to briefly explain it. (Figures 2, 4, 6 and 7).

Since the helical spring 33 is anchored at both ends to the bushing 15 keyed on the control shaft 1 and since there is a certain rotational clearance between a circular sector 35 of the bushing 15 and the wall of the hub 37, any drive of rotational movement, in one or the other direction, imparted to the shaft 1 gives rise to a narrowing of the helical spring 33 which therefore is "pulled" by the bushing 15 and thus may rotate within the circular seating 39 provided in the antifriction block 41.

On the contrary, when a rotation drive is imparted to the gear 9, the sector hub 37 of this latter rotates relative to the bushing 15 and imparts to the helical spring 33 a "thrust" command (in the opposite direction with respect to that of the "pulling") which determines a widening of said helical spring 33 and presses it against the walls of the seating 39 of the block 41.

Under these conditions the helical spring 33 cannot any longer rotate within the seating 39 of the block 41, and the winch device remains locked.

It can move only when the drive of rotation is imparted to it by means of the control shaft 1.

In the embodiment mentioned by way of example, the helical braking spring 33 has an opening between the ends forming a center angle ranging from 30° to 35°; the circular sector 35 of the bushing 15 has an opening of 45° and the opening of the sector 37 of the hub of the first gear 9 has an amplitude of about 120° measured still as a center angle of the missing zone.

It is obvious that the invention is not limited to the embodiment described and illustrated herein, and that numerous variations and further improvements may be made thereto, without departing from the scope of the invention.

CLAIMS

1. An energy recovering winch for roller blinds, characterized in that it is substantially formed by a manual control shaft (1) to whose outer end (3) there is applied the known manual operation device common to all the curtain winding up mechanisms, and on whose opposite end (5) disposed inside the control housing (7) there is keyed a bevel gear (9) in direct drive engagement with another bevel gear (11) orthogonal to it and coaxial to the winding up shaft (13); at the inner end (5) of said control shaft (1) there being mounted, in register with the first bevel gear (9), a support bushing (15) on which an irreversibility device is mounted which allows the gear (9) to move in one or the other direction of rotation, only when the movement comes from said control shaft (1), and preventing the movement to said control shaft (1) when the rotation drive is imparted to the gear (9) coaxial to the said control shatf; on the second bevel gear (11), perpendicular to the first bevel gear, there being keyed a central shaft (13) coaxial to the winding up shaft (17), rigidly connected to this latter and extending inside it, on which shaft there is wound a double helical spring (27) connected, on one hand, to a fixed point of the control housing (7) and, on the other hand, to a fixed point (29) of the curtain winding up shaft (17); the lowering movement of the curtain and the resulting rotation movement of the roller (17) on which the curtain is wound, torsionally loading said spring (27) which will store said energy and return it to the user during the lifting of the curtain, thereby facilitating said lifting of the curtain itself.

2. An energy recovering winch for roller blinds according to Claim 1, characterized in that the irreversibility device provided in the control box (7) of the winch is substantially formed by a helical spring (33) anchored with one of its ends on a keyed bushing (15) rigidly connected at (5) to the control shaft (1); said bushing (15) for hooking the helical spring (33) supporting laterally a circular sector (35) having a rotational clearance with respect to the cavity of the hub (37) of the first bevel gear (9), in which cavity said bushing (15) is housed; the hub (37) of said first bevel gear (9), the hooking bushing (15) for hooking the helical spring (33), and the spring (33) itself being lodged in a special block (41), for example an antifriction block, provided at the end of the housing (7) of the control shaft (1); the irreversibility mechanism being created in virtue of the fact that, when the drive of rotation, in one or the other direction, is directly given by the shaft (1), the rotational clearance provided between said shaft (1) and the hub (37) of the bevel gear (9) gives rise to a narrowing of said helical spring (33), because this latter is pulled by the shaft (1) with respect to the cavity of the hub (37) of the bevel gear (9), thus allowing the relative rotational movement of the spring (33) with respect to the seating (39) of the hub of the gear (9) and the antifriction lodging block (41); while, instead, when the drive of rotation is given directly to the bevel gear (9), this latter rotates, in one or the other direction relative to the bushing (15) to which the helical spring (33) is fastened, in a direction opposite to the "pulling" direction, thereby widening the spring (33) itself which exerts a pressure against the cylindrical wall of the seating (39) of the block (41), in which it is housed, thus locking said rotational movement in one and the other direction.

3. An energy recovering winch for roller blinds according to the preceding Claims, characterized in that the braking helical spring (33) of the irreversibility device has an opening between the ends, which is equal to a center angle of 30°-35°, and particularly 32°-33°; the circular sector (35) of the bushing (15) engaging said helical spring (33), having an amplitude of about 45°, still measured as a center angle; the missing zone of the sector hub (37) of the first bevel gear (9) forming a center angle of about 120°.

FIG.1

0141454

FIG. 2

FIG.6

FIG.4

FIG.7

FIG.5

FIG.3

FIG.8